# EUROPEAN PATENT APPLICATION

(11) **EP 4 316 952 A1**
(43) Date of publication of application: **07.02.2024**
(21) Application number: 22382757.7
(22) Date of filing: 04.08.2022
(51) Int. Cl.: B62D 25/02, B62D 21/15

(54) **A VEHICLE STRUCTURE**

(71) Applicant: AUTOTECH ENGINEERING S.L., 48340 Amorebieta-Etxano, Bizkaia (ES)
(72) Inventor: HEDSTRÖM, Kristian, 97188 Lulea (SE); BODIN, Hans, 954 42 Södra Sunderbyn (SE); MARQUEZ DURAN, Sergi, 08256 Rajadell, Barcelona (ES); RUIZ RUIZ, Carlos Manuel, Martorell 08760 (ES); ARRIAGA MATEO, Christian, 08800 Vilanova i la Geltrú (ES); BARBERAN GARCIA, Anna, 08640 Olesa de Montserrat (ES); VALENCIA CARRIÓ, Javier, 08241 Manresa (ES)
(74) Representative: Ehrner & Delmar Patentbyrå AB

(57) **Abstract**

A vehicle structure (100; 300) comprising a portion (102) including first and second members (108, 112) forming a closed space (120). The portion (102) comprises first and second reinforcement members (122, 126) located in the closed space (120) and attached to one another. First and second legs (130, 136) of the first reinforcement member (122) are corrugated and comprise corrugations (150, 152), wherein the corrugations comprise ridges (150) and grooves (152). Each one (130, 136) of the first and second legs (130, 136) of the first reinforcement member (122) has an outer surface (154). At the outer surface (154) each one (150) of one or more of the ridges (150) of the first leg (130) of the first reinforcement member (122) has a recess (158) at a first location (160).

## Description

### Technical Field

Aspects of the present invention relate to a vehicle structure comprising a portion having a longitudinal extension extending in a longitudinal direction. The portion comprises a first member having a longitudinal extension extending in the longitudinal direction and a second member having a longitudinal extension extending in the longitudinal direction. The first and second members are attached to one another such that the first and second members form a closed space.

### Background of the Invention

In the design of a frame portion of a motor vehicle, there is a compromise between weight and strength. For example, an advantageous manner of obtaining a good compromise is to produce a frame portion from one or more metal plates or metal alloy plates formed into a requested shape, e.g. a hat profile.

In general, a frame portion of a motor vehicle is formed to have a certain rigidity since it may receive various impacts from the outside. At the same time, some frame portions should allow deformation for absorbing impacts when receiving an overload, e.g. due to a collision with an external object, e.g. another vehicle or a stationary object, e.g. a tree etc. One example of a vehicle frame portion that should be allowed to deform for absorbing impacts while being rigid is the vehicle side sill structure, or the bumper or bumper beam.

### Summary of the Invention

The inventors of the present invention have found drawbacks in conventional vehicle frame portions, for example as discussed above. For example, some conventional solutions do not provide a sufficient deformation for absorbing impacts while being sufficiently rigid.

An object of the invention is to provide a solution which mitigates or solves drawbacks and problems of conventional solutions.

The above and further objects are solved by the subject matter of the independent claim. Further advantageous embodiments of the invention can be found in the dependent claims.

According to a first aspect of the invention, the above mentioned and other objects are achieved with a vehicle structure comprising a portion having a longitudinal extension extending in a longitudinal direction, wherein the portion comprises
a first member having a longitudinal extension extending in the longitudinal direction, and
a second member having a longitudinal extension extending in the longitudinal direction,
wherein the first member is configured to face an inside of a vehicle,
wherein the second member is configured to face an outside of the vehicle,
wherein the first and second members are attached to one another such that the first and second members form a closed space,
wherein the portion comprises a first reinforcement member located in the closed space, the first reinforcement member having a longitudinal extension extending in the longitudinal direction,
wherein the portion comprises a second reinforcement member located in the closed space, the second reinforcement member having a longitudinal extension extending in the longitudinal direction,
wherein the first reinforcement member is attached to the second reinforcement member,
wherein the first reinforcement member has a first leg having a transverse extension extending in a direction transverse to the longitudinal direction,
wherein the first reinforcement member has a second leg having a transverse extension extending in a direction transverse to the longitudinal direction,
wherein each one of the first and second legs of the first reinforcement member has a foot having a longitudinal extension extending in the longitudinal direction,
wherein the feet of the first and second legs of the first reinforcement member are spaced apart from one another,
wherein the first and second legs of the first reinforcement member are joined in a first head section,
wherein the first head section faces one of the first and second members while the feet of the first and second legs of the first reinforcement member face the other one of the first and second members,
wherein each one of the first and second legs of the first reinforcement member is corrugated and comprises corrugations, wherein the corrugations of each one of the first and second legs of the first reinforcement member comprise ridges and grooves,
wherein each one of the ridges and grooves of the first reinforcement member extends from the first head section to one of the feet of the first and second legs of the first reinforcement member,
wherein each one of the first and second legs of the first reinforcement member has an outer surface,
wherein each one of the first and second legs of the first reinforcement member has an inner surface facing the inner surface of the other one of the first and second legs of the first reinforcement member, and
wherein at the outer surface each one of one or more of the ridges of the first leg of the first reinforcement member has a recess at a first location.

An advantage of the vehicle structure according to the first aspect of the invention is that an advantageous deformation of the vehicle structure for absorbing impacts is provided while maintaining or improving the rigidity and reinforcement of the vehicle structure in order to prevent penetration upon collisions, for example lateral or side collisions. An advantage of the vehicle structure according to the first aspect of the invention is that the kinematic and load distribution of the vehicle structure can be efficiently controlled upon collisions, i.e. the way the vehicle structure deforms and/or collapses upon collisions can be efficiently controlled. An advantage of the vehicle structure according to the first aspect of the invention is that the energy absorption by the vehicle structure upon collisions is improved, for example that the vehicle structure provides a high energy absorption upon a collision while still being sufficiently rigid and reinforced to prevent the intrusion of an external object into the car upon a collision.

An advantage of the vehicle structure according to the first aspect of the invention is that the weight and cost of the vehicle structure can be reduced while still maintaining or even improving the rigidity and reinforcement of the vehicle structure. An advantage of the vehicle structure according to the first aspect of the invention is that the performance of the vehicle structure in collisions is improved, for example because the vehicle structure can be deformed in a more controlled and more predicted manner, whereby an improved vehicle structure is provided.

The vehicle structure may be a vehicle structure for a motor vehicle with a combustion engine, an electric vehicle having one or more electric batteries or a hybrid vehicle. For example, the vehicle may be a car or a truck. The vehicle structure may be configured to protect an electric battery of an electric vehicle or a hybrid vehicle, for example upon a collision. The vehicle structure may be located at one or more sides of an electric battery located in a vehicle. The vehicle structure is efficient in protecting the electric battery, the driver and/or one or more passengers of the vehicle upon a collision.

The vehicle structure is efficient as a protection with regard to pole collisions or crashes. The vehicle structure is efficient in preventing the intrusion of a pole into the car upon a pole collision. Thus, the vehicle structure provides an efficient intrusion resistance, i.e. the vehicle structure is efficient in preventing the intrusion of an external object into the car upon a collision. This is an important aspect with regard to electric battery protection.

A "closed space" mentioned above also includes spaces which are substantially or essentially closed. For example, there may one or more minor openings in the walls forming the closed space and/or at the ends of the portion of the vehicle structure.

According to an advantageous embodiment of the vehicle structure according to the first aspect, the recesses of the first leg of the first reinforcement member at the first locations are in alignment with one another in the longitudinal direction. An advantage of this embodiment is that the deformation of the vehicle structure for absorbing impacts is further improved while maintaining or improving the rigidity and reinforcement of the vehicle structure. An advantage of this embodiment is that the performance of the vehicle structure in collisions is further improved. An advantage of this embodiment is that a further improved vehicle structure is provided.

According to a further advantageous embodiment of the vehicle structure according to the first aspect, the first leg of the first reinforcement member has one or more inclinations in one or more directions transverse to the longitudinal direction so as to form the recess at the first location. An advantage of this embodiment is that the performance of the vehicle structure in collisions is further improved. An advantage of this embodiment is that a further improved vehicle structure is provided.

According to another advantageous embodiment of the vehicle structure according to the first aspect, at the outer surface each one of one or more of the ridges of the second leg of the first reinforcement member has a recess at a second location. An advantage of this embodiment is that the deformation of the vehicle structure for absorbing impacts is further improved while maintaining or improving the rigidity and reinforcement of the vehicle structure. An advantage of this embodiment is that the performance of the vehicle structure in collisions is further improved. An advantage of this embodiment is that a further improved vehicle structure is provided.

According to yet another advantageous embodiment of the vehicle structure according to the first aspect, the recesses of the second leg of the first reinforcement member at the second locations are in alignment with one another in the longitudinal direction. An advantage of this embodiment is that the deformation of the vehicle structure for absorbing impacts is further improved while maintaining or improving the rigidity and reinforcement of the vehicle structure. An advantage of this embodiment is that the performance of the vehicle structure in collisions is further improved. An advantage of this embodiment is that a further improved vehicle structure is provided.

According to still another advantageous embodiment of the vehicle structure according to the first aspect, the first reinforcement member defines an inner space between the first and second legs of the first reinforcement member, wherein the second location is opposite one of the first locations with said inner space therebetween. An advantage of this embodiment is that the performance of the vehicle structure in collisions is further improved. An advantage of this embodiment is that a further improved vehicle structure is provided.

According to an advantageous embodiment of the vehicle structure according to the first aspect, the second leg of the first reinforcement member has one or more inclinations in one or more directions transverse to the longitudinal direction so as to form the recess at the second location. An advantage of this embodiment is that the performance of the vehicle structure in collisions is further improved. An advantage of this embodiment is that a further improved vehicle structure is provided.

According to an advantageous embodiment of the vehicle structure according to the first aspect, the first head section faces the second member while the feet of the first and second legs of the first reinforcement member face the first member. An advantage of this embodiment is that the performance of the vehicle structure in collisions is further improved. An advantage of this embodiment is that a further improved vehicle structure is provided.

According to a further advantageous embodiment of the vehicle structure according to the first aspect, the feet of the first and second legs of the first reinforcement member are attached to the second reinforcement member. An advantage of this embodiment is that the performance of the vehicle structure in collisions is further improved. An advantage of this embodiment is that a further improved vehicle structure is provided.

According to another advantageous embodiment of the vehicle structure according to the first aspect, the first head section comprises a reinforcement structure having a longitudinal extension extending in the longitudinal direction so as to reinforce the first head section. An advantage of this embodiment is that the rigidity and reinforcement of the vehicle structure is further improved while maintaining or improving the deformation of the vehicle structure for absorbing impacts. An advantage of this embodiment is that the deformation can be designed and predicted in an improved manner, while maintaining or improving the rigidity and reinforcement of the vehicle structure. An advantage of this embodiment is that the performance of the vehicle structure in collisions is further improved. An advantage of this embodiment is that a further improved vehicle structure is provided.

According to yet another advantageous embodiment of the vehicle structure according to the first aspect, the reinforcement structure comprises one or more patches having a longitudinal extension extending in the longitudinal direction. An advantage of this embodiment is that the rigidity and reinforcement of the vehicle structure is further improved while maintaining or improving the deformation of the vehicle structure for absorbing impacts. An advantage of this embodiment is that the deformation can be designed and predicted in an improved manner, while maintaining or improving the rigidity and reinforcement of the vehicle structure. An advantage of this embodiment is that the performance of the vehicle structure in collisions is further improved. An advantage of this embodiment is that a further improved vehicle structure is provided.

According to still another advantageous embodiment of the vehicle structure according to the first aspect, the first head section has an outer surface,
wherein the first head section has an inner surface facing the inner surfaces of the first and second legs of the first reinforcement member, and
wherein the patch is attached to the inner surface of the first head section. An advantage of this embodiment is that a further improved vehicle structure is provided.

According to an advantageous embodiment of the vehicle structure according to the first aspect, the patch is made of a first material, wherein the first and second legs of the first reinforcement member and the first head section are made of second material different from the first material. An advantage of this embodiment is that a further improved deformation of the vehicle structure for absorbing impacts is provided, for example because the deformation can be designed and predicted in an improved manner, while maintaining or improving the rigidity and reinforcement of the vehicle structure. An advantage of this embodiment is that the performance of the vehicle structure in collisions is further improved. An advantage of this embodiment is that a further improved vehicle structure is provided.

According to a further advantageous embodiment of the vehicle structure according to the first aspect, the mechanical strength of the first material is higher than the mechanical strength of the second material. An advantage of this embodiment is that the performance of the vehicle structure in collisions is further improved. An advantage of this embodiment is that a further improved vehicle structure is provided.

According to another advantageous embodiment of the vehicle structure according to the first aspect, the first and second legs of the first reinforcement member overlap one another in the first head section so as to form the reinforcement structure. An advantage of this embodiment is that the rigidity and reinforcement of the vehicle structure is further improved while maintaining or improving the deformation of the vehicle structure for absorbing impacts. An advantage of this embodiment is that the deformation can be designed and predicted in an improved manner, while maintaining or improving the rigidity and reinforcement of the vehicle structure. An advantage of this embodiment is that the performance of the vehicle structure in collisions is further improved. An advantage of this embodiment is that a further improved vehicle structure is provided.

According to yet another advantageous embodiment of the vehicle structure according to the first aspect, the first head section is corrugated,
wherein the first and second legs of the first reinforcement member and the first head section comprise the corrugations of the first reinforcement member including the ridges and grooves of the first reinforcement member, and
wherein each one of the ridges of the first reinforcement member extends from the foot of the first leg of the first reinforcement member to the foot of the second leg of the first reinforcement member through the first head section.
An advantage of this embodiment is that the rigidity and reinforcement of the vehicle structure is further improved while maintaining or improving the deformation of the vehicle structure for absorbing impacts. An advantage of this embodiment is that the performance of the vehicle structure in collisions is further improved. An advantage of this embodiment is that a further improved vehicle structure is provided.

According to still another advantageous embodiment of the vehicle structure according to the first aspect, each one of the grooves of the first reinforcement member extends from the foot of the first leg of the first reinforcement member to the foot of the second leg of the first reinforcement member through the first head section. An advantage of this embodiment is that the performance of the vehicle structure in collisions is further improved. An advantage of this embodiment is that a further improved vehicle structure is provided.

According to an advantageous embodiment of the vehicle structure according to the first aspect, the foot of the first leg of the first reinforcement member is wave-shaped so as to form openings between the second reinforcement member and the first leg of the first reinforcement member, and
wherein the openings between the second reinforcement member and the first leg of the first reinforcement member are located after one another in the longitudinal direction.

An advantage of this embodiment is that any liquid medium applied to the surface of the first and second reinforcement members and/or the first and second members for coating can be drained away in an efficient manner, for example liquid medium used in a KTL (Kathodische Tauchlackierung) process. An advantage of this embodiment is that the process of producing the vehicle structure is facilitated and improved. An advantage of this embodiment is that a further improved vehicle structure is provided.

According to a further advantageous embodiment of the vehicle structure according to the first aspect, the foot of the second leg of the first reinforcement member is wave-shaped so as to form openings between the second reinforcement member and the second leg of the first reinforcement member, and
wherein the openings between the second reinforcement member and the second leg of the first reinforcement member are located after one another in the longitudinal direction.

An advantage of this embodiment is that any liquid medium applied to the surface of the first and second reinforcement members and/or the first and second members for coating can be drained away in an even more efficient manner, for example liquid medium used in the KTL process. An advantage of this embodiment is that the process of producing the vehicle structure is further facilitated and further improved. An advantage of this embodiment is that a further improved vehicle structure is provided.

According to another advantageous embodiment of the vehicle structure according to the first aspect, one or more of the first and second reinforcement members comprises/comprise one or more attachment tongues for the attachment to one or more of the first and second members. An advantage of this embodiment is that the process of producing the vehicle structure is further facilitated and further improved. An advantage of this embodiment is that a further improved vehicle structure is provided.

According to yet another advantageous embodiment of the vehicle structure according to the first aspect, the second reinforcement member has a first leg having a transverse extension extending in a direction transverse to the longitudinal direction,
wherein the second reinforcement member has a second leg having a transverse extension extending in a direction transverse to the longitudinal direction,
wherein each one of the first and second legs of the second reinforcement member has a foot having a longitudinal extension extending in the longitudinal direction,
wherein the feet of the first and second legs of the second reinforcement member are spaced apart from one another,
wherein the first and second legs of the second reinforcement member are joined in a second head section, and
wherein the second head section faces one of the first and second members while the feet of the first and second legs of the second reinforcement member face the other one of the first and second members.
An advantage of this embodiment is that the performance of the vehicle structure in collisions is further improved. An advantage of this embodiment is that a further improved vehicle structure is provided. An advantage of this embodiment is that the intrusion of a pole, or an external object, into the car upon a collision is efficiently prevented.

According to another advantageous embodiment of the vehicle structure according to the first aspect, each one of the first and second legs of the second reinforcement member is corrugated and comprises corrugations, wherein the corrugations of each one of the first and second legs of the second reinforcement member comprise ridges and grooves, and wherein each one of the ridges and grooves of the second reinforcement member extends from the second head section to one of the feet of the first and second legs of the second reinforcement member. An advantage of this embodiment is that the intrusion of a pole, or an external object, into the car upon a collision is further efficiently prevented. An advantage of this embodiment is that the performance of the vehicle structure in collisions is further improved. An advantage of this embodiment is that a further improved vehicle structure is provided.

According to still another advantageous embodiment of the vehicle structure according to the first aspect, the second head section faces one of the first and second members while the first head section faces the other one of the first and second members. An advantage of this embodiment is that the performance of the vehicle structure in collisions is further improved. An advantage of this embodiment is that a further improved vehicle structure is provided.

According to an advantageous embodiment of the vehicle structure according to the first aspect, the second head section faces the first member while the feet of the first and second legs of the second reinforcement member face the second member. An advantage of this embodiment is that the performance of the vehicle structure in collisions is further improved. An advantage of this embodiment is that a further improved vehicle structure is provided.

According to a further advantageous embodiment of the vehicle structure according to the first aspect, the foot of the first leg of the first reinforcement member is attached to the first leg of the second reinforcement member, wherein the foot of the second leg of the first reinforcement member is attached to the second leg of the second reinforcement member. An advantage of this embodiment is that the rigidity and reinforcement of the vehicle structure is further improved while maintaining or improving the deformation of the vehicle structure for absorbing impacts. An advantage of this embodiment is that the performance of the vehicle structure in collisions is further improved. An advantage of this embodiment is that a further improved vehicle structure is provided.

According to another advantageous embodiment of the vehicle structure according to the first aspect, the first reinforcement member defines an inner space between the first and second legs of the first reinforcement member, wherein the second head section and the feet of the second reinforcement member are located outside the inner space defined by the first reinforcement member. An advantage of this embodiment is that the rigidity and reinforcement of the vehicle structure is further improved while maintaining or improving the deformation of the vehicle structure for absorbing impacts. An advantage of this embodiment is that the performance of the vehicle structure in collisions is further improved. An advantage of this embodiment is that a further improved vehicle structure is provided.

According to yet another advantageous embodiment of the vehicle structure according to the first aspect, the first reinforcement member defines an inner space between the first and second legs of the first reinforcement member, wherein the entire second reinforcement member is located outside the inner space defined by the first reinforcement member. An advantage of this embodiment is that the rigidity and reinforcement of the vehicle structure is further improved while maintaining or improving the deformation of the vehicle structure for absorbing impacts. An advantage of this embodiment is that the performance of the vehicle structure in collisions is further improved. An advantage of this embodiment is that a further improved vehicle structure is provided.

According to still another advantageous embodiment of the vehicle structure according to the first aspect, the ridges and grooves of each one of the first and second legs of the first reinforcement member form a smooth wave shape extending along the longitudinal extension of the first reinforcement member in the longitudinal direction. An advantage of this embodiment is that the performance of the vehicle structure in collisions is further improved. An advantage of this embodiment is that a further improved vehicle structure is provided.

According to an advantageous embodiment of the vehicle structure according to the first aspect, the ridges and grooves of the first leg of the first reinforcement member form the first leg of the first reinforcement member, wherein the ridges and grooves of the second leg of the first reinforcement member form the second leg of the first reinforcement member. An advantage of this embodiment is that the performance of the vehicle structure in collisions is further improved. An advantage of this embodiment is that a further improved vehicle structure is provided.

According to another advantageous embodiment of the vehicle structure according to the first aspect, one or more of the first and second reinforcement members is/are formed from one or more plates, formed from one or more plates by way of hot press forming, formed from one or more plates by way of cold forming/working, hydroformed, or extruded. This is an efficient way to produce the first or second reinforcement member.

According to still another advantageous embodiment of the vehicle structure according to the first aspect, one or more of the first and second reinforcement members is/are made of a material comprising or consisting of a metal or a metal alloy. This is an efficient way to produce a strong first or second reinforcement member.

According to an advantageous embodiment of the vehicle structure according to the first aspect, one or more of the first and second members is/are formed from a plate, formed from one or more plates by way of hot press forming, or formed from one or more plates by way of cold forming/working. This is an efficient way to produce the first and second members.

According to a further advantageous embodiment of the vehicle structure according to the first aspect, one or more of the first and second members is/are made of a material comprising or consisting of a metal or a metal alloy. This is an efficient way to produce strong first and second members.

According to another advantageous embodiment of the vehicle structure according to the first aspect, one or more of the first and second members comprises/comprise one of the group of:
- a hat profile; and
- a U-profile.

This is an efficient way to produce the first and second members and provide the closed space.

According still another advantageous embodiment of the vehicle structure according to the first aspect, the vehicle structure is a vehicle side structure, wherein the portion is a side portion. The vehicle structure is suitable to be applied as a vehicle side structure of a vehicle, whereby the performance of a vehicle side structure in lateral or side collisions is improved. Thus, an improved vehicle side structure is provided. However, in alternative embodiments, the vehicle structure may be applied and mounted elsewhere to the vehicle, for example in the front of the vehicle, and may there be part of a bumper, in the rear of the vehicle, or elsewhere within the vehicle.

According to yet another advantageous embodiment of the vehicle structure according to the first aspect, the portion is a side sill portion, wherein the longitudinal extension of the side sill portion is configured to extend in a longitudinal direction of a vehicle body of the vehicle and is configured to be provided at a side of the vehicle body. An advantage of this embodiment is that an advantageous deformation of the vehicle structure having a side sill portion for absorbing impacts is provided while maintaining or improving the rigidity and reinforcement of a vehicle structure. The innovative first reinforcement member is especially advantageous for a side sill portion of the vehicle structure, where impacts should be absorbed upon certain collisions. However, in alternative embodiments, instead of a side sill portion, the portion or the side portion may be a side beam portion, a bumper portion, or a beam portion configured to be located elsewhere in a vehicle.

According to still advantageous embodiment of the vehicle structure according to the first aspect, the side sill portion is configured to be attached to one or more cross beams of the vehicle body. Hereby, the rigidity of the vehicle structure may be further improved.

The above-mentioned features and embodiments of the vehicle structure may be combined in various possible ways providing further advantageous embodiments.

Further advantageous embodiments of the vehicle structure according to the first aspect and further advantages with the embodiments of the present invention emerge from the dependent claims and the detailed description of embodiments.

### Brief Description of the Drawings

The present invention will now be described, for exemplary purposes, in more detail by way of embodiments and with reference to the enclosed drawings, where similar references are used for similar parts, in which:
- Figure 1: is a schematic top perspective view of the first and second reinforcement members of a first embodiment of the vehicle structure according to the first aspect of the invention;
- Figure 2: is a schematic bottom perspective view of the first and second reinforcement members of figure 1;
- Figure 3: is another schematic bottom perspective view of the first and second reinforcement members of figure 1;
- Figure 4: is a schematic side view of the first and second reinforcement members of figure 1;
- Figure 5: is a schematic top view of the first and second reinforcement members of figure 1;
- Figure 6: is a schematic bottom view of the first and second reinforcement members of figure 1;
- Figure 7: is a schematic exploded perspective view of a first embodiment of the vehicle structure according to the first aspect of the invention;
- Figure 8: is a cross-section view of the assembled vehicle structure of figure 7;
- Figure 9: is a cross-section of the assembled vehicle structure of figure 7 along a different plane in relation to figure 8;
- Figure 10: schematically illustrates a portion of the first and second reinforcement members of figure 5 and a section along G-G in figure 10;
- Figure 11: is a cross-section of the assembled vehicle structure of figure 7 along *A-A* in figure 10;
- Figure 12: is a schematic top perspective view of the first and second reinforcement members of a second embodiment of the vehicle structure according to the first aspect of the invention;
- Figure 13: is a schematic bottom perspective view of the first and second reinforcement members of figure 12;
- Figure 14: is a schematic top perspective view of the first and second reinforcement members of figure 12;
- Figure 15: is a schematic side view of the first and second reinforcement members of figure 12;
- Figure 16: is a schematic top view of the first and second reinforcement members of figure 12;
- Figure 17: is a schematic bottom view of the first and second reinforcement members of figure 12;
- Figure 18: is a schematic exploded perspective view of a second embodiment of the vehicle structure according to the first aspect of the invention;
- Figure 19: is a cross-section view of the assembled vehicle structure of figure 18;
- Figure 20: is a cross-section of the assembled vehicle structure of figure 18 along a different plane in relation to figure 19;
- Figure 21: schematically illustrates a portion of the first and second reinforcement members of figure 16 and a section along *D-D* in figure 21; and
- Figure 22: is a cross-section of the assembled vehicle structure of figure 7 along *B-B* in figure 21.

### Detailed Description

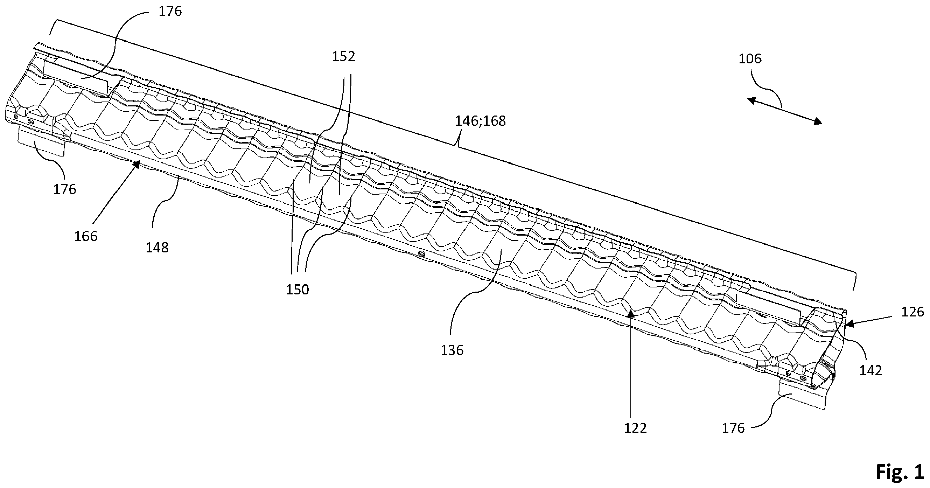

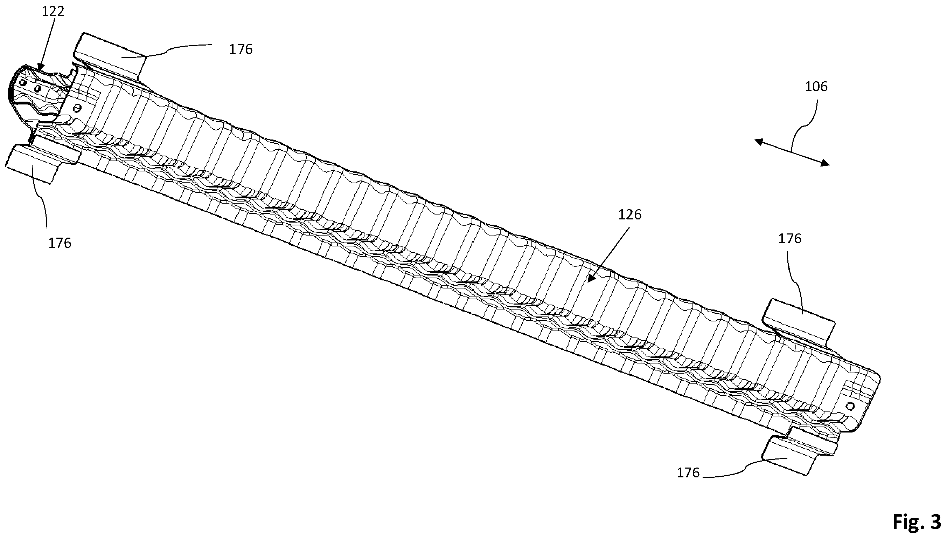

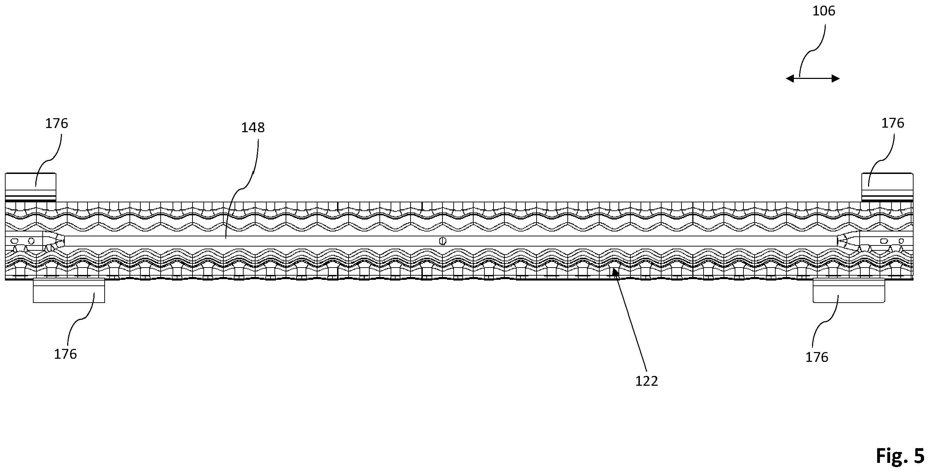

With reference to figures 1 to 11, a first embodiment of the vehicle structure 100 according to the first aspect of the invention and aspects of embodiments of the vehicle structure according to the first aspect of the invention are schematically illustrated.

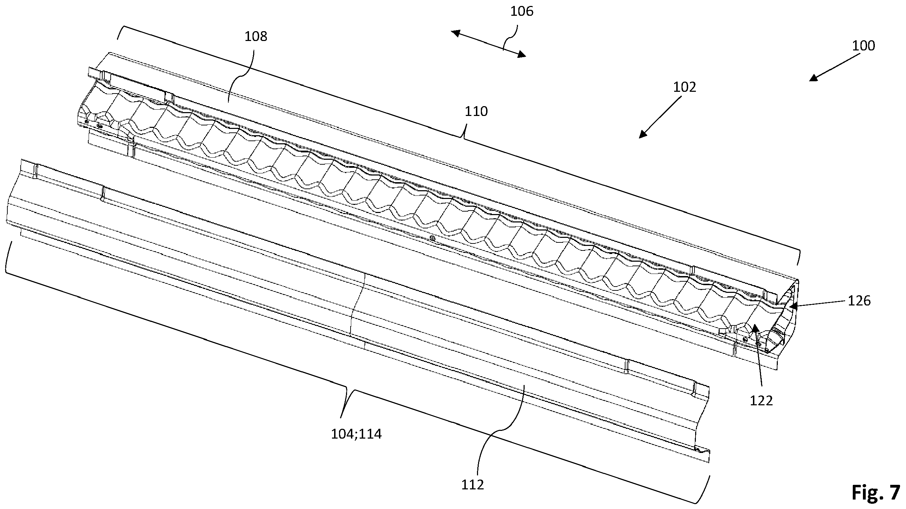

With reference to figures 7 to 9, the vehicle structure 100 includes a portion 102 having a longitudinal extension 104 extending in a longitudinal direction 106. The portion 102 includes a first member 108 having a longitudinal extension 110 extending in the longitudinal direction 106. The portion 102 includes a second member 112 having a longitudinal extension 114 extending in the longitudinal direction 106. The first member 108 is configured to face an inside 116 of a vehicle. The second member 112 is configured to face an outside 118 of the vehicle. The first and second members 108, 112 are attached to one another such that the first and second members 108, 112 form a closed space 120. Thus, when the vehicle structure 100 has been installed, the first member 108 may face the inside 116 of the vehicle while the second member 112 may face the outside 118 of the same vehicle.

A "closed space" 120 in the present disclosure also includes spaces which are substantially or essentially closed. For example, there may be one or more minor openings in the walls forming the closed space 120 and/or at the ends of the portion 102 of the vehicle structure 100, but still the space 120 is to be considered to be closed. For example, the first and second members 108, 112 may be attached to one another by welding, such as laser welding, spot welding, or continuous welding, a mechanical locking structure, such as rivets, an adhesive, or any other suitable fastening means.

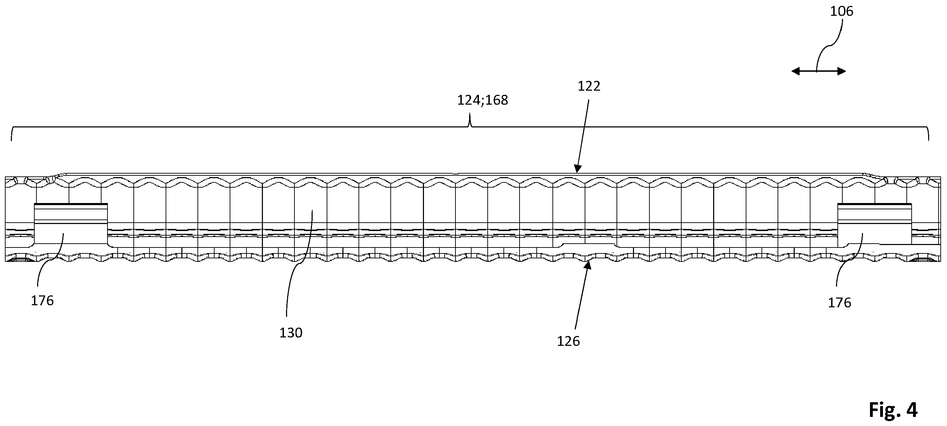

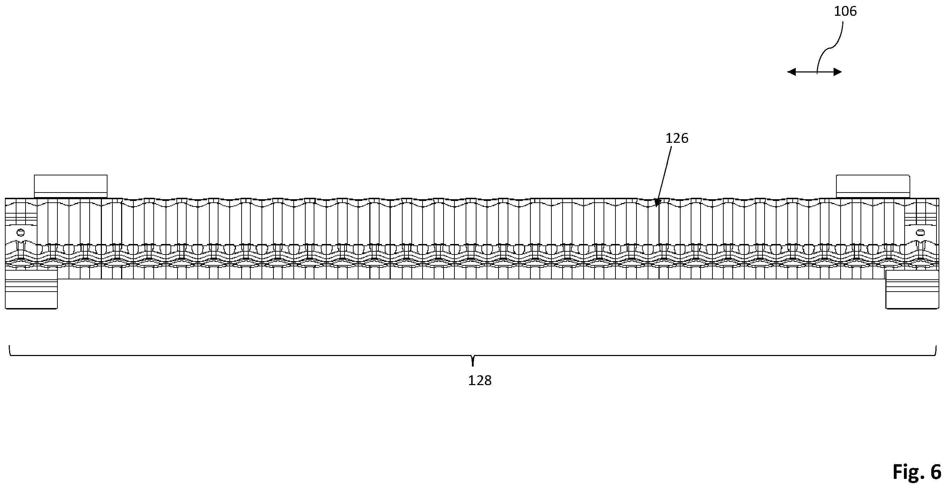

With reference to figures 1 to 9, the portion 102 includes a first reinforcement member 122 located in the closed space 102. The first reinforcement member 122 has a longitudinal extension 124 (see figure 4) extending in the longitudinal direction 106. The portion 102 includes a second reinforcement member 126 located in the closed space 120. The second reinforcement member 126 has a longitudinal extension 128 (see figure 6) extending in the longitudinal direction 106. The first reinforcement member 122 is attached to the second reinforcement member 126. For example, the first reinforcement member 122 may be attached to the second reinforcement member 126 by welding, such as laser welding, spot welding, or continuous welding, a mechanical locking structure, such as rivets, an adhesive, or any other suitable fastening means. One or more of the first and second reinforcement members 122, 126 may be attached to one or more the first and second members 108, 112, for example by welding, such as laser welding, or spot welding, a mechanical locking structure, such as rivets, an adhesive, or any other suitable fastening means.

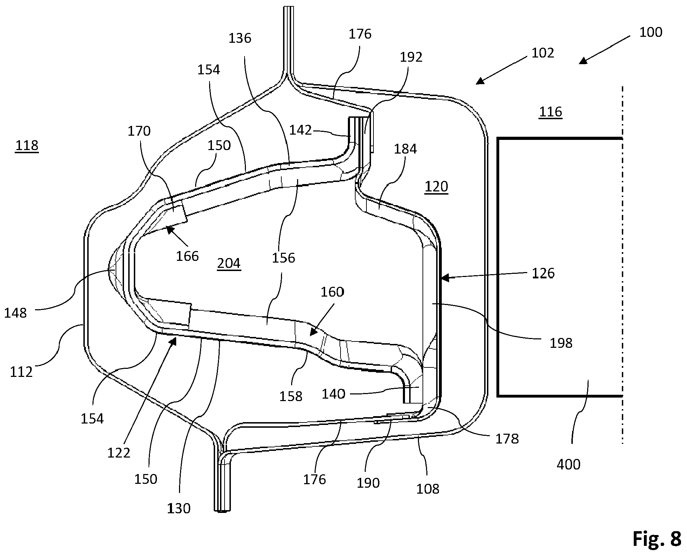

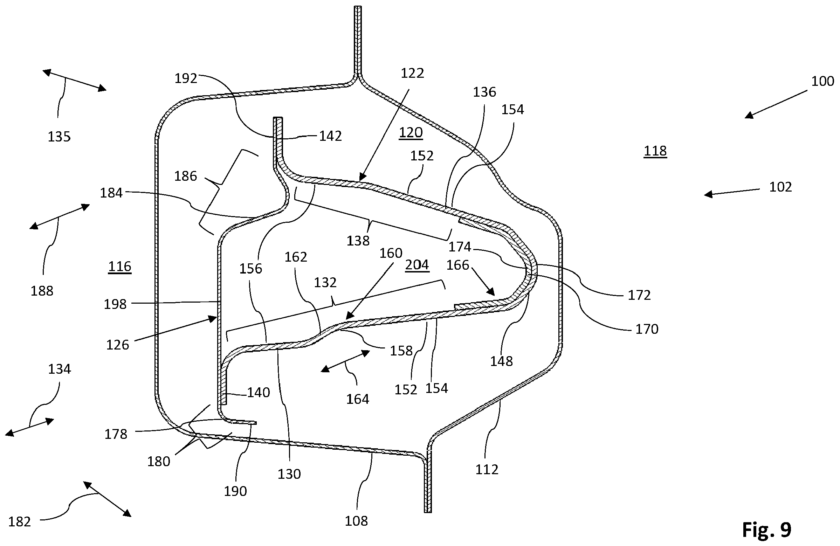

With reference to figures 8 and 9, the first reinforcement member 122 has a first leg 130 having a transverse extension 132 extending in a direction 134 transverse to the longitudinal direction 106. The first reinforcement member 122 has a second leg 136 having a transverse extension 138 extending in a direction 135 transverse to the longitudinal direction 106.

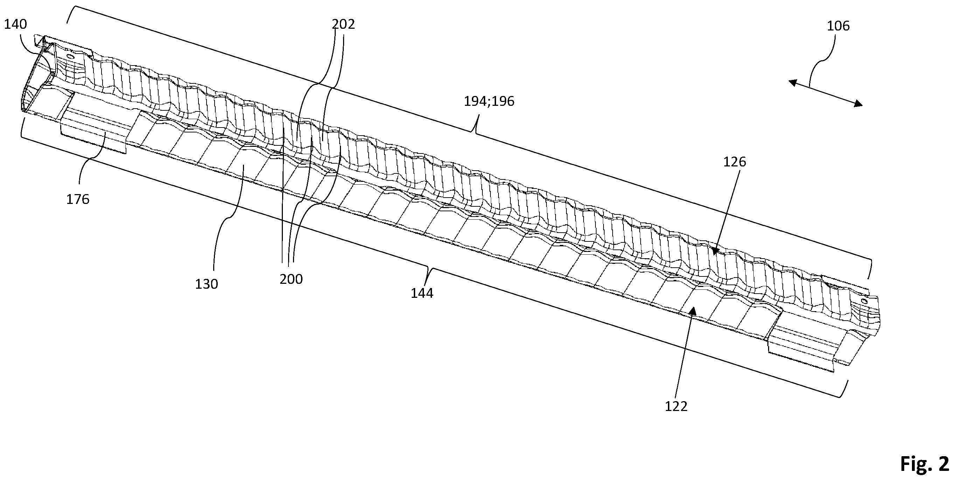

With reference to figures 1 to 9, each one 130, 136 of the first and second legs 130, 136 of the first reinforcement member 122 has a foot 140, 142 having a longitudinal extension 144, 146 (see figures 1 and 2) extending in the longitudinal direction 106. The feet 140, 142 of the first and second legs 130, 136 of the first reinforcement member 122 are spaced apart from one another. The first and second legs 130, 136 of the first reinforcement member 122 are joined in a first head section 148. The first head section 148 faces one 108, 112 of the first and second members 108, 112 while the feet 140, 142 of the first and second legs 130, 136 of the first reinforcement member 122 face the other one 108, 112 of the first and second members 108, 112. It is to be understood that the foot 140, 142 is located at an end of the leg 130, 136.

With reference to figures 1 to 9, each one 130, 136 of the first and second legs 130, 136 of the first reinforcement member 122 is corrugated and includes corrugations 150, 152. The corrugations 150, 152 of each one 130, 136 of the first and second legs 130, 136 of the first reinforcement member 122 include ridges 150 and grooves 152. Each one 150, 152 of the ridges 150 and grooves 152 of the first reinforcement member 122 extends from the first head section 148 to one 140, 142 of the feet 140, 142 of the first and second legs 130, 136 of the first reinforcement member 122.

With reference to figures 1 to 9, each one 130, 136 of the first and second legs 130, 136 of the first reinforcement member 122 has an outer surface 154. Each one 130, 136 of the first and second legs 130, 136 of the first reinforcement member 122 has an inner surface 156 facing the inner surface 156 of the other one 130, 136 of the first and second legs 130, 136 of the first reinforcement member 122.

With reference to figures 1 to 9, at the outer surface 154 each one 150 of one or more of the ridges 150 of the first leg 130 of the first reinforcement member 122 has a recess 158 at a first location 160. For some embodiments, the recess 158 may comprise a depression or a dent. For some embodiments, one or more of the first reinforcement member 122, first leg 130 and second leg 136 may comprise an additional group of one or more ridges without any recess. For some embodiments, the recess 158 may be located midway between the foot 140 and first head section 148.

With reference to figures 1 to 9, for some embodiments, the recesses 158 of the first leg 130 of the first reinforcement member 122 at the first locations 160 are in alignment with one another in the longitudinal direction 106. Thus, when looking in the longitudinal direction 106, the recesses 158 of the first leg 130 of the first reinforcement member 122 at the first locations 160 may be positioned along an essentially straight imaginary line extending in the longitudinal direction 106. However, for other embodiments, the recesses 158 of the first leg 130 of the first reinforcement member 122 at the first locations 160 may not be in alignment with one another in the longitudinal direction 106, for example, be located at different distances from the first head section 148.

With reference to figures 8 and 9, for some embodiments, the first leg 130 of the first reinforcement member 122 may have one or more inclinations 162 (see figure 9) in one or more directions 164 transverse to the longitudinal direction 106 so as to form the recess 158 at the first location 160.

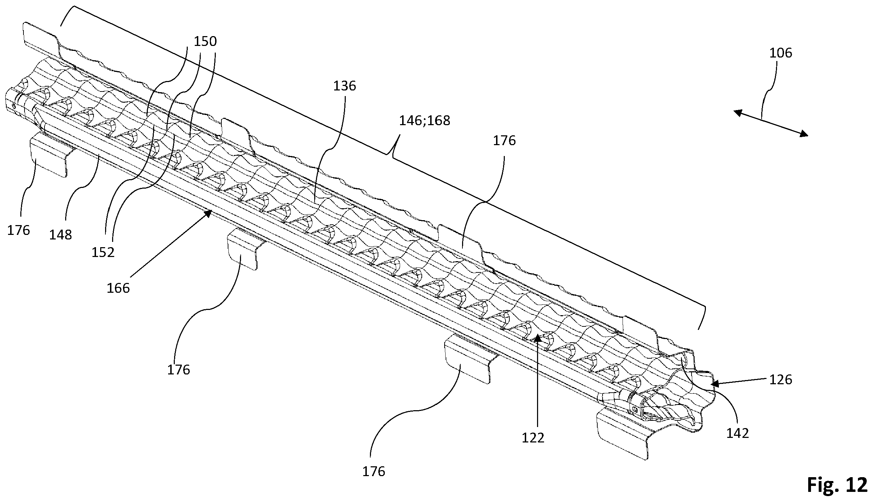

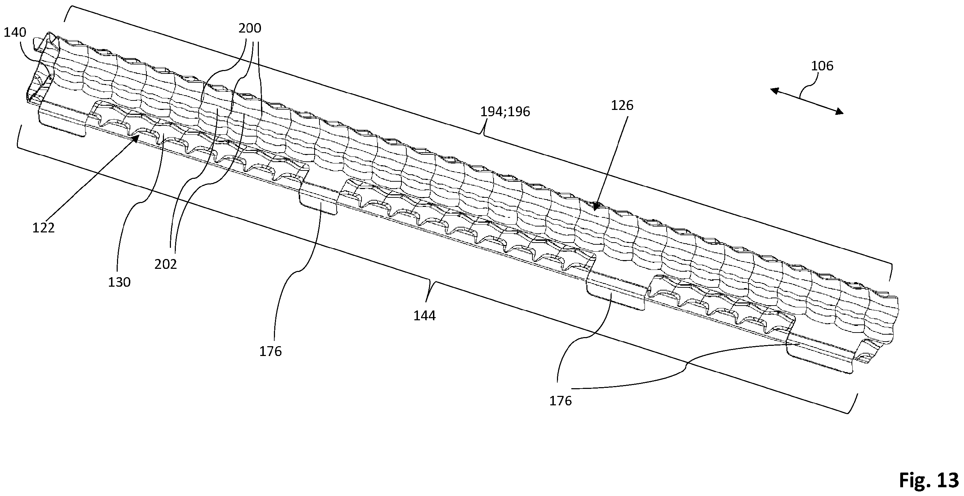

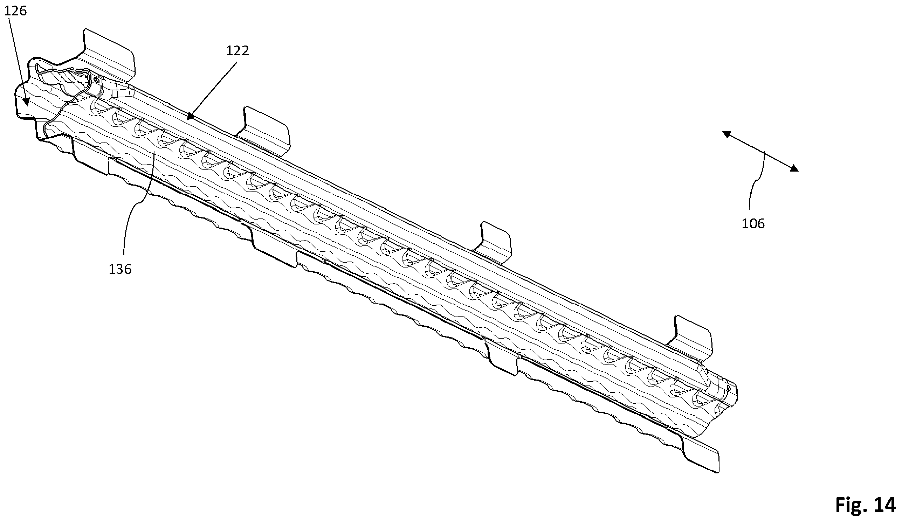

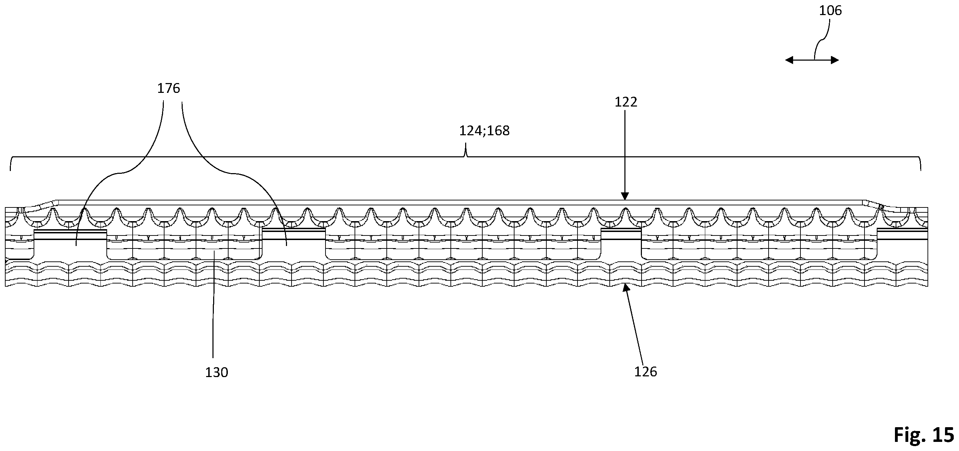

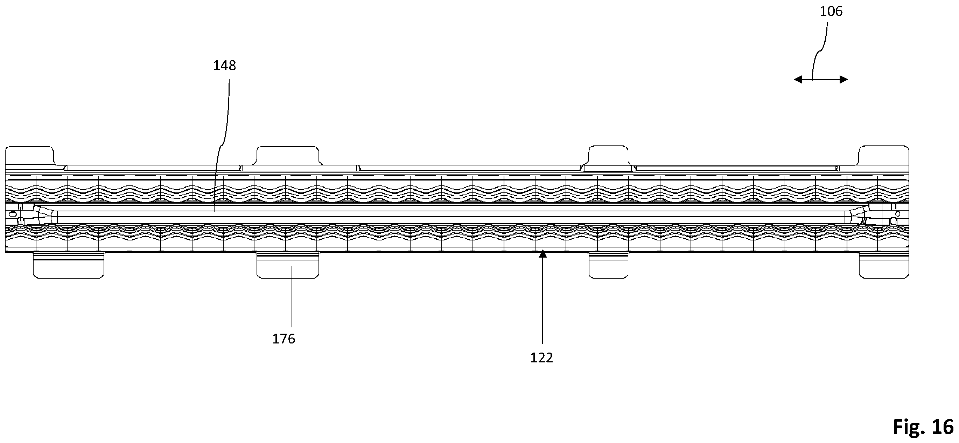

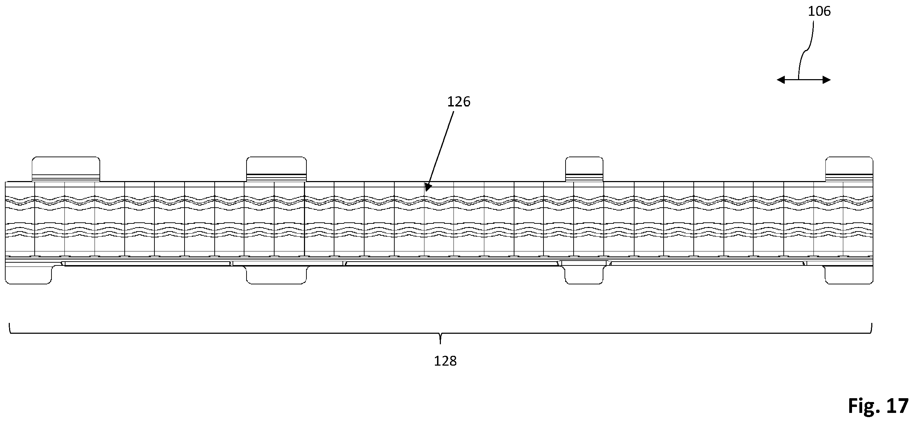

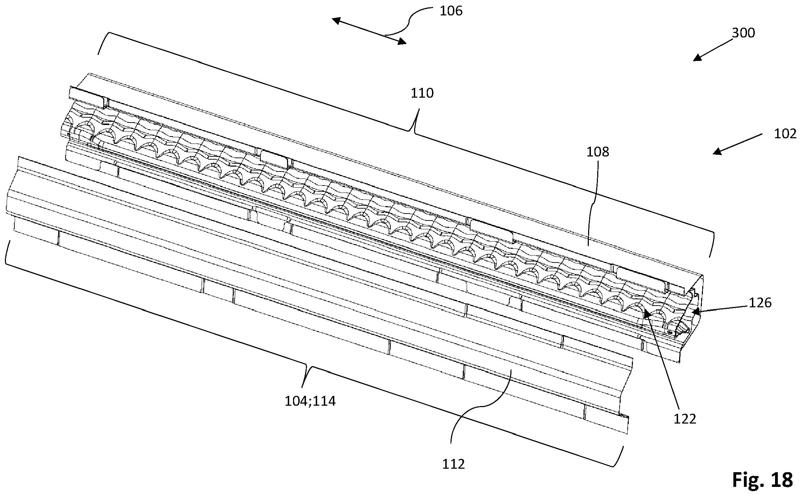

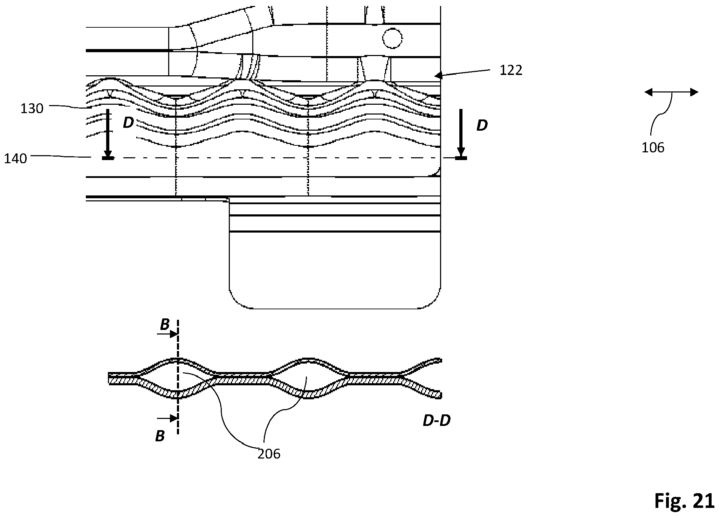

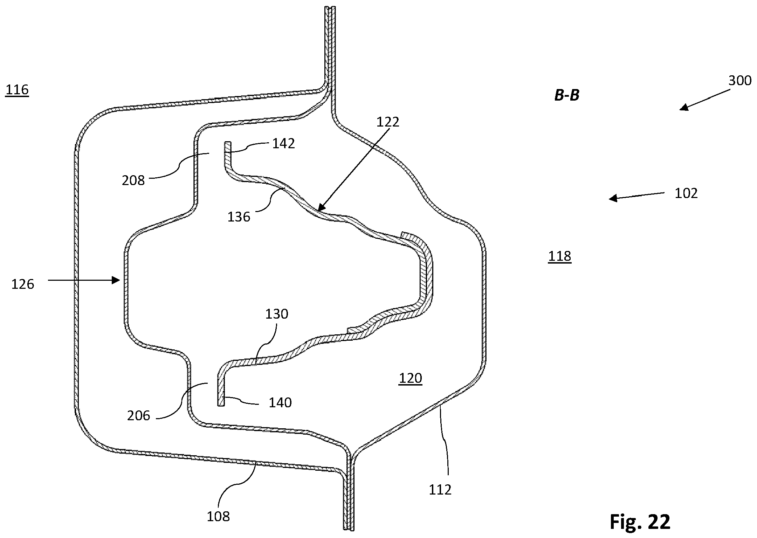

With reference to figures 1 to 9, for some embodiments, at the outer surface 154 each one 150 of one or more of the ridges 150 of the first leg 130 of the first reinforcement member 122 may have one or more additional recesses at one or more additional locations. For some embodiments, at the outer surface 154 each one 150 of one or more of the ridges 150 of the second leg 136 of the first reinforcement member 122 may have a recess at a second location, which is disclosed in more detail hereinbelow in connection with the second embodiment disclosed in figures 12 to 22.

With reference to figures 1 to 9, for some embodiments, the first head section 148 may face the second member 112 while the feet 140, 142 of the first and second legs 130, 136 of the first reinforcement member 122 face the first member 108 However, for other embodiments, it may be the other way round. For some embodiments, the feet 140, 142 of the first and second legs 130, 136 of the first reinforcement member 122 may be attached to the second reinforcement member 126.

With reference to figures 1, 8 and 9, for some embodiments, the first head section 148 may include a reinforcement structure 166 having a longitudinal extension 168 (see figures 1 and 4) extending in the longitudinal direction 106 so as to reinforce the first head section 148. For some embodiments, the reinforcement structure 166 may include one or more patches 170 having a longitudinal extension 168 extending in the longitudinal direction 106. With reference to figures 8 and 9, for some embodiments, it may be defined that the first head section 148 has an outer surface 172 and that the first head section 148 has an inner surface 174 facing the inner surfaces 156 of the first and second legs 130, 136 of the first reinforcement member 122. For some embodiments, the one or more patches 170 may be attached to the inner surface 174 of the first head section 148. However, for other embodiments, the patch 170 may be attached to the outer surface 172 of the first head section 148. For some embodiments, the one or more patches 170 may be attached to the first head section 148 by being stamped or press formed together.

With reference to figures 8 and 9, for some embodiments, the one or more patches 170 may be made of a first material while the first and second legs 130, 136 of the first reinforcement member 122 and the first head section 148 are made of second material different from the first material. For example, the mechanical strength of the first material may be higher than the mechanical strength of the second material. For example, the first material may be thicker than the second material. For example, the mechanical strength of the first material may be above 1500 MPa. For example, the mechanical strength of the first material may be approx. 1500 MPa, or approx. 2000 MPa. For example, the mechanical strength of the second material may be below 1000 MPa. One or more of the first and second materials may be a ductile material. For example, one or more of the first and second materials may comprise *Ductibor 1000,* or *Ductibor 500.* However, other materials are possible.

With reference to figures 1 to 9, for some embodiments, the first head section 148 may be corrugated, wherein the first and second legs 130, 136 of the first reinforcement member 122 and the first head section 148 may include the corrugations 150, 152 of the first reinforcement member 122 including the ridges 150 and grooves 152 of the first reinforcement member 122, and wherein each one of the ridges 150 of the first reinforcement member 122 extends from the foot 140 of the first leg 130 of the first reinforcement member 122 to the foot 142 of the second leg 136 of the first reinforcement member 122 through the first head section 148. For some embodiments, each one 152 of the grooves 152 of the first reinforcement member 122 may extend from the foot 140 of the first leg 130 of the first reinforcement member 122 to the foot 142 of the second leg 136 of the first reinforcement member 122 through the first head section 148.

With reference to figures 1 to 9, for some embodiments, one or more of the first and second reinforcement members 122, 126 may include one or more attachment tongues 176 for the attachment to one or more of the first and second members 108, 112. In the embodiment illustrated in figures 1 to 19, the second reinforcement member 126 has attachment tongues 176 attached thereto or formed therewith. However, for other embodiments, the first reinforcement member 122 may be provided with the one or more attachment tongues 176. The attachment tongue 176 may be integrally formed with one of the first and second reinforcement members 122, 126, or the attachment tongue 176 may be attached to one or more of the of the first and second reinforcement members 122, 126 by welding, such as laser welding, spot welding, a mechanical locking structure, such as rivets, an adhesive, or any other suitable fastening means.

With reference to figures 8 and 9, for some embodiments, the second reinforcement member 126 may have a first leg 178 having a transverse extension 180 extending in a direction 182 transverse to the longitudinal direction 106, and the second reinforcement member 126 may have a second leg 184 having a transverse extension 186 extending in a direction 188 transverse to the longitudinal direction 106. Each one 178, 184 of the first and second legs 178, 184 of the second reinforcement member 126 has a foot 190, 192 having a longitudinal extension 194, 196 (see figure 2) extending in the longitudinal direction 106. The feet 190, 192 of the first and second legs 178, 184 of the second reinforcement member 126 are spaced apart from one another. The first and second legs 178, 184 of the second reinforcement member 126 are joined in a second head section 198. The second head section 198 faces one 108, 112 of the first and second members 108, 112 while the feet 190, 192 of the first and second legs 178, 184 of the second reinforcement member 126 face the other one 108, 112 of the first and second members 108, 112.

With reference to figures 1 to 9, for some embodiments, each one 178, 184 of the first and second legs 178, 184 of the second reinforcement member 126 may be corrugated and may comprise corrugations 200, 202 (see figure 2). The corrugations 200, 202 of each one 178, 184 of the first and second legs 178, 184 of the second reinforcement member 126 include ridges 200 and grooves 202. Each one 200, 202 of the ridges 200 and grooves 202 of the second reinforcement member 126 extends from the second head section 198 to one 190, 192 of the feet 190, 192 of the first and second legs 178, 184 of the second reinforcement member 126. However, for some embodiments, the first and second legs 178, 184 of the second reinforcement member 126 may be non-corrugated, i.e. be without any corrugations.

With reference to figures 1 to 9, for some embodiments, the second head section 198 may face one 108, 112 of the first and second members 108, 112 while the first head section 148 faces the other one 108, 112 of the first and second members 108, 112. The second head section 198 may face the first member 108 while the feet 190, 192 of the first and second legs 178, 184 of the second reinforcement member 126 face the second member 112. For some embodiments, the foot 140 of the first leg 130 of the first reinforcement member 122 may be attached to the first leg 178 of the second reinforcement member 126 while the foot 142 of the second leg 136 of the first reinforcement member 122 may be attached to the second leg 184 of the second reinforcement member 126.

With reference to figures 8 and 9, for some embodiments, the first reinforcement member 122 may described to define an inner space 204 between the first and second legs 130, 136 of the first reinforcement member 122. For some embodiments, the second head section 198 and the feet 190, 192 of the second reinforcement member 126 may be located outside the inner space 204 defined by the first reinforcement member 122. For some embodiments, the entire second reinforcement member 126 may be located outside the inner space 204 defined by the first reinforcement member 122.

With reference to figures 1 to 9, for some embodiments, the ridges 150 and grooves 152 of each one 130, 136 of the first and second legs 130, 136 of the first reinforcement member 122 may be described to form a smooth wave shape extending along the longitudinal extension 124 of the first reinforcement member 122 in the longitudinal direction 106. For some embodiments, the ridges 150 and grooves 152 of the first leg 130 of the first reinforcement member 122 may form the first leg 130 of the first reinforcement member 122 while the ridges 150 and grooves 152 of the second leg 136 of the first reinforcement member 122 may form the second leg 136 of the first reinforcement member 122. However, for alternative embodiments, one or more of the first and second legs 130, 136 of the first reinforcement member 122 may include one or more sections without any ridges 150 and grooves 152, such as one or more flat longitudinal sections or regions.

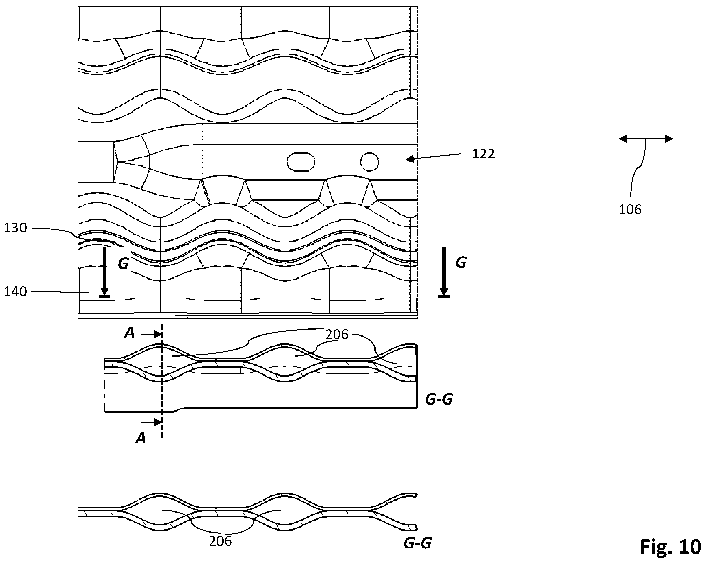

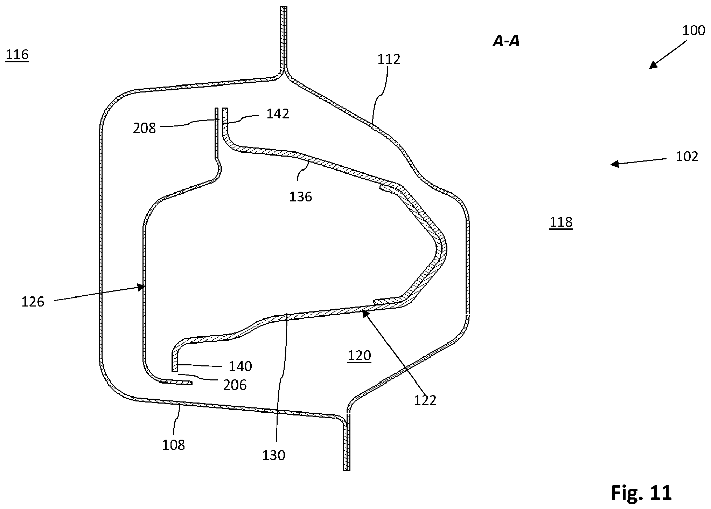

With reference to figures 10 and 11, for some embodiments, the foot 140 of the first leg 130 of the first reinforcement member 122 may be wave-shaped so as to form, or define, openings 206 between the second reinforcement member 126 and the first leg 130 of the first reinforcement member 122. The openings 206 between the second reinforcement member 126 and the first leg 130 of the first reinforcement member 122 are located after one another in the longitudinal direction 106. For some embodiments, the foot 142 of the second leg 136 of the first reinforcement member 122 may be wave-shaped so as to form openings 208 between the second reinforcement member 126 and the second leg 136 of the first reinforcement member 122. The openings 208 between the second reinforcement member 126 and the second leg 136 of the first reinforcement member 122 are located after one another in the longitudinal direction 106. An advantage of said openings 206, 208 is that any liquid medium applied to the surface of the first and second reinforcement members 122, 126 and/or the first and second members 108, 112 for coating can be drained away, for example liquid medium used in a KTL (Kathodische Tauchlackierung) process.

With reference to figures 12 to 22, a second embodiment of the vehicle structure 300 according to the first aspect of the invention and further aspects of embodiments of the vehicle structure according to the first aspect of the invention are schematically illustrated. Several features of the second embodiment of the vehicle structure 300 may correspond to features of the first embodiment of the vehicle structure 100 of figures 1 to 11 and are thus not repeated here to avoid repetition. The vehicle structure 300 of figures 12 to 22 differs from the vehicle structure 100 of figures 1 to 11 in that at the outer surface 154 each one 150 of one or more of the ridges 150 of the second leg 136 of the first reinforcement member 122 has a recess 302 at a second location 304, as illustrated in figures 12 to 22. For some embodiments, the recesses 302 of the second leg 136 of the first reinforcement member 122 at the second locations 304 may be in alignment with one another in the longitudinal direction 106. However, for other embodiments, the recesses 302 of the first leg 136 of the first reinforcement member 122 at the second locations 304 may not be in alignment with one another in the longitudinal direction 106. For some embodiments, at the outer surface 154 each one 150 of one or more of the ridges 150 of the second leg 136 of the first reinforcement member 122 may have one or more additional recesses at one or more additional locations.

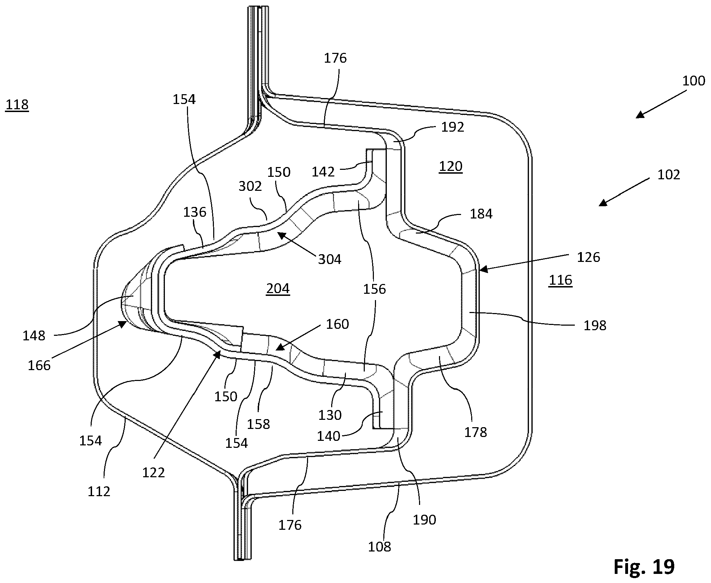

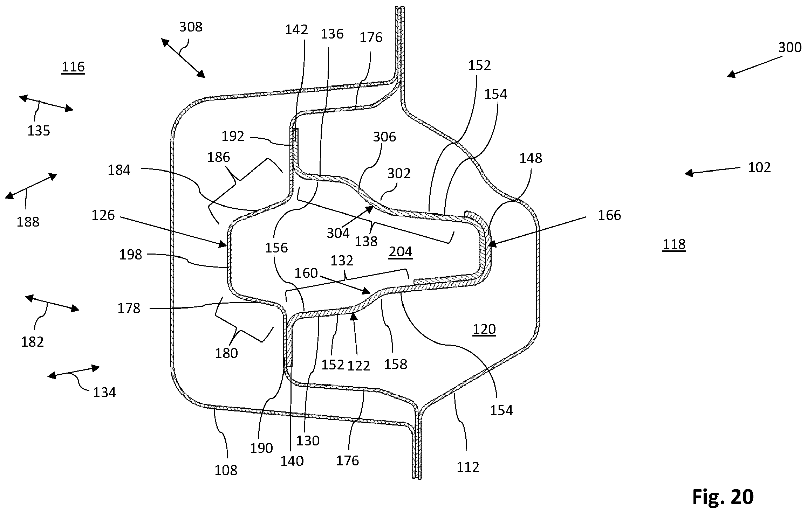

With reference to figures 19 and 20, for some embodiments, the first reinforcement member 122 may define, or form, an inner space 204 between the first and second legs 130, 136 of the first reinforcement member 122, wherein the second location 304 may be opposite one 160 of the first locations 160 with said inner space 204 therebetween. However, for other embodiments, the second location 304 may be located elsewhere, i.e. not opposite one 160 of the first locations 160. For some embodiments, the second leg 136 of the first reinforcement member 122 may have one or more inclinations 306 in one or more directions 308 transverse to the longitudinal direction 106 so as to form the recess 302 at the second location 304.

Further, with reference to figures 19 and 20, the vehicle structure 300 of figures 12 to 22 differs from the vehicle structure 100 of figures 1 to 11 in that the first and second legs 130, 136 of the first reinforcement member 122 overlap one another in the first head section 148 so as to form the reinforcement structure 166, as illustrated in figures 12 to 22. Thus, the reinforcement structure 166 of the vehicle structure 300 of figures 12 to 22 do not include any patch. However, for other embodiments, the reinforcement structure 166 may include both overlapping legs and one or more patches 170. Otherwise, other features of the vehicle structure 300 of figures 12 to 22 may correspond to features of the vehicle structure 100 of figures 1 to 11.

With reference to figures 1 to 22, for some embodiments, one or more of the first and second reinforcement members 122, 126 may be formed from one or more plates, formed from one or more plates by way of hot press forming, formed from one or more plates by way of cold forming/working, hydroformed, or extruded. For some embodiments, one or more of the first and second reinforcement members 122, 126 may be made of a material comprising or consisting of a metal or a metal alloy, for example aluminium, or steel, or a material including aluminium or steel. For some embodiments, one or more of the first and second reinforcement members 122, 126 may be made of a material comprising or consisting of a polymer or a polymer composite, such as a fibre reinforced polymer, for example a carbon fibre reinforced polymer (CFRP). However, other materials are possible. One or more of the first and second members 108, 112 may be formed from a plate, formed from one or more plates by way of hot press forming, or formed from one or more plates by way of cold forming/working. One or more of the first and second members 108, 112 may be made of a material comprising or consisting of a metal or a metal alloy, for example aluminium. However, other materials are possible. For some embodiments, one or more of the first and second members 108, 112 may comprise one of the group of: a hat profile; and a U-profile.

For some embodiments, the following types of material may be used for one or more of the first and second reinforcement members 122, 126 and first and second members 108, 112, or for any other element or member included in the vehicle structure 100; 300:
There are several known Ultra High Strength steels (UHSS) for hot stamping and hardening. The blank may be made e.g. of a boron steel, coated or uncoated, such as Usibor^{®} (22MnB5) commercially available from ArcelorMittal.

Usibor^{®} 1500P is an example of a 22MnB5 steel. The composition of Usibor^{®} is summarized below in weight percentages (rest is iron (Fe) and unavoidable impurities):
Maximum carbon (C) (%): 0.25
Maximum silicon (Si) (%): 0.4
Maximum manganese (Mn) (%): 1.4
Maximum phosphorus (P) (%): 0.03
Maximum sulphur (S) (%): 0.01
Aluminium (Al) (%): 0.01 - 0.1
Maximum titanium (Ti) (%): 0.05
Maximum niobium (Nb) (%): 0.01
Maximum copper (Cu) (%): 0.20
Maximum boron (B) (%): 0.005
Maximum chromium (Cr) (%): 0.35

Usibor^{®} 1500P may have a yield strength of e.g. 1100 MPa, and an ultimate tensile strength of 1500 MPa.

Usibor^{®} 2000 is another boron steel with even higher strength. The yield strength of Usibor^{®} 2000 may be 1400 MPa or more, and the ultimate tensile strength may be above 1800 MPa. The composition of Usibor^{®} 2000 is summarized below in weight percentages (rest is iron (Fe) and impurities):
Maximum carbon (C) (%): 0.36
Maximum silicon (Si) (%): 0.8
Maximum manganese (Mn) (%): 0.8
Maximum phosphorus (P) (%): 0.03
Maximum sulphur (S) (%): 0.01
Aluminium (Al) (%): 0.01 - 0.06
Maximum titanium (Ti) (%): 0.07
Maximum niobium (Nb) (%): 0.07
Maximum copper (Cu) (%): 0.20
Maximum boron (B) (%): 0.005
Maximum chromium (Cr) (%): 0.50
Maximum molybdenum (Mb) (%): 0.50

In addition to the Ultra High Strength Steels mentioned before, more ductile steels may also be used in parts of the structural skeleton requiring energy absorption. These steels may be used in hot stamping processes but will not obtain a martensitic microstructure in the process. Examples of suitable, more ductile steels include Ductibor^{®} 500, Ductibor^{®} 1000 and CRL-340LA.

Another material used in hot stamping is Ductibor^{®} 500. Ductibor^{®} 500 is a steel material with much higher ductility and these can be effective for absorbing energy during an impact. The yield strength of Ductibor^{®} 500 may be 400 MPa or more, and the ultimate tensile strength of 550 MPa or more.

The composition of Ductibor^{®} 500 is summarized below in weight percentages (rest is iron (Fe) and impurities):
Maximum carbon (C) (%): 0.1
Maximum silicon (Si) (%): 0.5
Maximum manganese (Mn) (%): 1.7
Maximum phosphorus (P) (%): 0.03
Maximum sulphur (S) (%): 0.025
Aluminium (Al) (%): 0.015 - 0.2
Maximum titanium (Ti) (%): 0.09
Maximum niobium (Nb) (%): 0.10
Maximum copper (Cu) (%): 0.20
Maximum boron (B) (%): 0.001
Maximum chromium (Cr) (%): 0.20

Ductibor^{®} 1000 is another material used in hot stamping for increasing the elongation if compared to Usibor^{®} 1500 and Usibor^{®} 2000. The yield strength of Ductibor^{®} 1000 may be 800 MPa or more, and the ultimate tensile strength of 1000 MPa or more. The composition of Ductibor^{®} 1000 is summarized below in weight percentages (rest is iron (Fe) and impurities):
Maximum carbon (C) (%): 0.10
Maximum silicon (Si) (%): 0.6
Maximum manganese (Mn) (%): 1.8
Maximum phosphorus (P) (%): 0.03
Maximum sulphur (S) (%): 0.01
Aluminium (Al) (%): 0.01 - 0.1
Maximum titanium (Ti) (%): 0.05
Maximum niobium (Nb) (%): 0.10
Maximum copper (Cu) (%): 0.20
Maximum boron (B) (%): 0.005
Maximum chromium (Cr) (%): 0.20

Each of the vehicle structures 100, 300 described above may be a vehicle side structure, and the respective portion 102 may be a side portion. However, the vehicle structure 100, 300 may be applied and mounted elsewhere to the vehicle, for example in the front of the vehicle, and may there be part of a bumper, in the rear of the vehicle, or elsewhere within the vehicle. The vehicle structure 100, 300 may for example be used in an electric vehicle or a hybrid vehicle, but of course also in a regular vehicle with a combustion engine only. The vehicle structure 100, 300 may be configured to protect one or more electric batteries of an electric vehicle or a hybrid vehicle, for example upon a collision. Thus, the vehicle structure 100, 300 may be located at one or more sides of the electric battery. The vehicle structure 100, 300 is efficient in protecting the driver and/or one or more passengers of the vehicle upon a collision. The vehicle structure 100, 300 is efficient as a protection with regard to pole collisions or crashes. The vehicle structure 100, 300 is efficient in preventing the intrusion of a pole into the car upon a pole collision.

For some embodiments, the portion 102 is a side sill portion, wherein the longitudinal extension 104 of the side sill portion 102 is configured to extend in a longitudinal direction 106 of a vehicle body of the vehicle and is configured to be provided at a side of the vehicle body. With reference to figure 8, for some embodiments, the side sill portion 102 may be configured to be attached, or be attachable, to one or more cross beams 400 of the vehicle body, for example two cross beams of the vehicle body. However, in alternative embodiments, instead of a side sill portion, the portion or the side portion may be a side beam portion, a bumper portion, or a beam portion configured to be located elsewhere in a vehicle.

The features of the different embodiments of the vehicle structure disclosed above may be combined in various possible ways providing further advantageous embodiments.

The present invention is not limited to the above-described embodiments. Instead, the present invention relates to, and encompasses all different embodiments being included within the scope of the appended independent claim.

## Claims

1. A vehicle structure (100; 300) comprising a portion (102) having a longitudinal extension (104) extending in a longitudinal direction (106), wherein the portion (102) comprises
a first member (108) having a longitudinal extension (110) extending in the longitudinal direction (106), and
a second member (112) having a longitudinal extension (114) extending in the longitudinal direction (106),
wherein the first member (108) is configured to face an inside (116) of a vehicle,
wherein the second member (112) is configured to face an outside (118) of the vehicle,
wherein the first and second members (108, 112) are attached to one another such that the first and second members (108, 113) form a closed space (120),
wherein the portion (102) comprises a first reinforcement member (122) located in the closed space (120), the first reinforcement member (122) having a longitudinal extension (124) extending in the longitudinal direction (106),
wherein the portion (102) comprises a second reinforcement member (126) located in the closed space (120), the second reinforcement member (126) having a longitudinal extension (128) extending in the longitudinal direction (106),
wherein the first reinforcement member (122) is attached to the second reinforcement member (126),
wherein the first reinforcement member (122) has a first leg (130) having a transverse extension (132) extending in a direction (134) transverse to the longitudinal direction (106),
wherein the first reinforcement member (122) has a second leg (136) having a transverse extension (138) extending in a direction (135) transverse to the longitudinal direction (106),
wherein each one (130, 136) of the first and second legs (130, 136) of the first reinforcement member (122) has a foot (140, 142) having a longitudinal extension (144, 146) extending in the longitudinal direction (106),
wherein the feet (140, 142) of the first and second legs (130, 136) of the first reinforcement member (122) are spaced apart from one another,
wherein the first and second legs (130, 136) of the first reinforcement member (122) are joined in a first head section (148),
wherein the first head section (148) faces one (108, 112) of the first and second members (108, 112) while the feet (140, 142) of the first and second legs (130, 136) of the first reinforcement member (122) face the other one (108, 112) of the first and second members (108, 112),
wherein each one (130, 136) of the first and second legs (130, 136) of the first reinforcement member (122) is corrugated and comprises corrugations (150, 152), wherein the corrugations (150, 152) of each one (130, 136) of the first and second legs (130, 136) of the first reinforcement member (122) comprise ridges (150) and grooves (152),
wherein each one (150, 152) of the ridges and grooves (150, 152) of the first reinforcement member (122) extends from the first head section (148) to one (140, 142) of the feet (140, 142) of the first and second legs (130, 136) of the first reinforcement member (122),
wherein each one (130, 136) of the first and second legs (130, 136) of the first reinforcement member (122) has an outer surface (154),
wherein each one (130, 136) of the first and second legs (130, 136) of the first reinforcement member (122) has an inner surface (156) facing the inner surface (156) of the other one (130, 136) of the first and second legs (130, 136) of the first reinforcement member (122), and
wherein at the outer surface (154) each one (150) of one or more of the ridges (150) of the first leg (130) of the first reinforcement member (122) has a recess (158) at a first location (160).

2. A vehicle structure (100; 300) according to claim 1, wherein the recesses (158) of the first leg (130) of the first reinforcement member (122) at the first locations (160) are in alignment with one another in the longitudinal direction (106).

3. A vehicle structure (100; 300) according to claim 1 or 2, wherein the first leg (160) of the first reinforcement member (122) has one or more inclinations (162) in one or more directions (164) transverse to the longitudinal direction (106) so as to form the recess (158) at the first location (160).

4. A vehicle structure (300) according to any one of the claims 1 to 3, wherein at the outer surface (154) each one (150) of one or more of the ridges (150) of the second leg (136) of the first reinforcement member (122) has a recess (302) at a second location (304).

5. A vehicle structure (300) according to claim 4, wherein the first reinforcement member (122) defines an inner space (204) between the first and second legs (130, 136) of the first reinforcement member (122), and
wherein the second location (304) is opposite one (160) of the first locations (160) with said inner space (204) therebetween.

6. A vehicle structure (100; 300) according to any one of the claims 1 to 5, wherein the first head section (148) faces the second member (112) while the feet (140, 142) of the first and second legs (130, 136) of the first reinforcement member (122) face the first member (108).

7. A vehicle structure (100; 300) according to any one of the claims 1 to 6, wherein the feet (140, 142) of the first and second legs (130, 136) of the first reinforcement member (122) are attached to the second reinforcement member (126).

8. A vehicle structure (100; 300) according to any one of the claims 1 to 7, wherein the first head section (148) comprises a reinforcement structure (166) having a longitudinal extension (168) extending in the longitudinal direction (106) so as to reinforce the first head section (148).

9. A vehicle structure (100) according to claim 8, wherein the reinforcement structure (166) comprises one or more patches (170) having a longitudinal extension (168) extending in the longitudinal direction (106).

10. A vehicle structure (100) according to claim 9, wherein the patch (170) is made of a first material, and
wherein the first and second legs (130, 136) of the first reinforcement member (122) and the first head section (148) are made of second material different from the first material.

11. A vehicle structure (300) according to any one of the claims 8 to 10, wherein the first and second legs (130, 136) of the first reinforcement member (122) overlap one another in the first head section (148) so as to form the reinforcement structure (166).

12. A vehicle structure (100; 300) according to any one of the claims 1 to 11, wherein the foot (140) of the first leg (130) of the first reinforcement member (122) is wave-shaped so as to form openings (206) between the second reinforcement member (126) and the first leg (130) of the first reinforcement member (122), and
wherein the openings (206) between the second reinforcement member (126) and the first leg (130) of the first reinforcement member (122) are located after one another in the longitudinal direction (106).

13. A vehicle structure (100; 300) according to any one of the claims 1 to 12, wherein the second reinforcement member (126) has a first leg (178) having a transverse extension (180) extending in a direction (182) transverse to the longitudinal direction (106),
wherein the second reinforcement member (126) has a second leg (184) having a transverse extension (186) extending in a direction (188) transverse to the longitudinal direction (106),
wherein each one (178, 184) of the first and second legs (178, 184) of the second reinforcement member (126) has a foot (190, 192) having a longitudinal extension (194, 196) extending in the longitudinal direction (106),
wherein the feet (190, 192) of the first and second legs (178, 184) of the second reinforcement member (126) are spaced apart from one another,
wherein the first and second legs (178, 184) of the second reinforcement member (126) are joined in a second head section (198), and
wherein the second head section (198) faces one (108, 112) of the first and second members (108, 112) while the feet (190, 192) of the first and second legs (178, 184) of the second reinforcement member (126) face the other one (108, 112) of the first and second members (108, 112).

14. A vehicle structure (100; 300) according to claim 13, wherein the foot (140) of the first leg (130) of the first reinforcement member (122) is attached to the first leg (178) of the second reinforcement member (126), and
wherein the foot (142) of the second leg (136) of the first reinforcement member (122) is attached to the second leg (184) of the second reinforcement member (126).

15. A vehicle structure (100; 300) according to claim 13 or 14, wherein the first reinforcement member (122) defines an inner space (204) between the first and second legs (130, 136) of the first reinforcement member (122), and
wherein the second head section (198) and the feet (190, 192) of the second reinforcement member (126) are located outside the inner space (204) defined by the first reinforcement member (122).
